# EUROPEAN PATENT APPLICATION

(11) **EP 3 202 984 A1**
(43) Date of publication of application: **09.08.2017**
(21) Application number: 15847802.4
(22) Date of filing: 17.07.2015
(51) Int. Cl.: E02F 9/00, E02F 9/20, F02D 29/00, F02D 29/02, B60R 25/20, E05B 49/00

(54) **CONSTRUCTION MACHINERY**

(30) Priority: 30.09.2014 JP 2014201319
(71) Applicant: HITACHI CONSTRUCTION MACHINERY TIERRA CO., LTD., Minakuchicho, Koka-shi, Shiga 5280061 (JP)
(72) Inventor: NOMURA Takuya, Tsuchiura-shi Ibaraki 300-0013 (JP); TAKISHITA Tatsuo, Tsuchiura-shi Ibaraki 300-0013 (JP); YUNOUE Masayuki, Tsuchiura-shi Ibaraki 300-0013 (JP); TAKAGI Wataru, Tsuchiura-shi Ibaraki 300-0013 (JP); SUMIDA Yoshikatsu, Tsuchiura-shi Ibaraki 300-0013 (JP)
(74) Representative: Beetz & Partner mbB
(86) International application number: PCT/JP2015/070532
(87) International publication number: WO 2016/051929

(57) **Abstract**

A hydraulic excavator (1) includes a wireless authentication starting device (37) for switching conduction or non-conduction between a battery (18) and a starter motor (16) as well as a first electrical component (24) on the basis of an operation of a power switch (12) provided in the vicinity of an operator's seat (9) and authentication of a portable key (38) by wireless communication. The wireless authentication starting device (37) switches an "engine stop/conduction OFF" state to an "engine stop/conduction ON" state when, in the "engine stop/conduction OFF" state, the portable key (38) is within an authenticable range, the gate lock lever (13) is at an unlock position, and the power switch (12) is operated.

## Description

### TECHNICAL FIELD

The present invention relates to a construction machine that is provided with a wireless authentication starting device for starting/stopping an engine on the basis of an operation of a power switch provided in the vicinity of an operator's seat and authentication of a portable key (mobile machine) by wireless communication, for example.

### BACKGROUND ART

In general, in a construction machine such as a hydraulic excavator, a hydraulic crane or the like, an engine is started/stopped on the basis of an operation of a key switch by an operator. More specifically, the operator of the construction machine inserts a key (key plate) in a key cylinder of the key switch and rotates the key when starting (starting-up) the engine. In this case, when a key groove of key and a key cylinder groove match each other, the key is made rotatable.

The operator rotates the key to any one of a position of "OFF" where electrical devices of the construction machine are not electrically conducted and the engine is stopped, a position of "ON" where the electrical devices are electrically conducted, and a position of "START" where the engine is started (a starter motor of the engine is rotated) (Patent Document 1), for example.

When the operator rotates the key from the "OFF" position to the "START" position beyond the "ON" position, for example, the starter motor of the engine is rotated, and the engine is started. At this time, in the case where the operator leaves his/her hand from the key, the key returns from the "START" position to the "ON" position of a state of "engine driven/conduction ON" state where the electrical devices are electrically conducted in a state where the engine is driven.

On the other hand, in the case where the operator rotates the key from the "OFF" position to the "ON" position, an "engine stop/conduction ON" state where the electrical device is electrically conducted while the engine is stopped is brought about. When the operator further rotates the key from the "ON" position to the "OFF" position, the electrical device is not electrically conducted any more, and when the engine is driven at this time, the engine is stopped.

### PRIOR ART DOCUMENT

### PATENT DOCUMENT

Patent Document 1: Japanese Patent Laid-Open No. 2013-155564 A

### SUMMARY OF THE INVENTION

Incidentally, according to the conventional art, only with the key, the "engine stop/conduction ON" state can be brought about by rotating the key from the "OFF" position to the "ON" position under any condition. In other words, even a person not familiar with an operation of a construction machine can bring about the "engine stop/conduction ON" state with the key. In this case, if the person who brought about the "engine stop/conduction ON" state leaves the construction machine without returning the key to the "OFF" position, a charged amount of a battery which is a power supply of the electrical devices lowers and there is a concern that the battery runs out.

The present invention was made in view of the aforementioned conventional art problem and has an object to provide a construction machine that can suppress an operation by a person other than those who know an operating method of the construction machine.

A construction machine of the present invention comprises: an engine which is a power source; a battery which is an electronic power supply of electrical devices including the engine; a hydraulic pump driven by the engine and supplying a pressurized oil; a hydraulic actuator driven by the pressurized oil supplied from the hydraulic pump; a lock lever switched by an operation of an operator between a lock position where driving of the hydraulic actuator is prohibited and an unlock position where driving of the hydraulic actuator is permitted; and an operator's seat on which the operator is seated, wherein a work is performed by driving of the hydraulic actuator in a state where the lock lever is switched to the unlock position.

In order to solve the aforementioned problem, a characteristic of a configuration adopted by the present invention is that a power switch provided in the vicinity of the operator's seat and operated by the operator is provided; and a wireless authentication starting device for switching conduction or non-conduction between the battery and the electrical device on the basis of an operation of the power switch and authentication of the portable key by wireless communication is provided; assuming that a state where the engine is stopped and the electrical device is not conducted is made an "engine stop/conduction OFF" state; a state where the engine is driven and the electrical device is conducted is made an "engine driven/conduction ON" state; and a state where the engine is stopped and the electrical device is conducted is made an "engine stop/conduction ON" state, when, in the "engine stop/conduction OFF" state, the portable key is within an authenticable range, the lock lever is at the unlock position, and the power switch is operated, the wireless authentication starting device switches the "engine stop/conduction OFF" state to the "engine stop/conduction ON" state; and when, in the "engine stop/conduction OFF" state, the portable key is within the authenticable range, the lock lever is at the lock position, and the power switch is operated, the wireless authentication starting device switches the "engine stop/conduction OFF" state to the "engine driven/conduction ON" state.

According to this arrangement, if the portable key is within the authenticable range in the "engine stop/conduction OFF" state, the wireless authentication starting device switches the "engine stop/conduction OFF" state to the "engine stop/conduction ON" state when the power switch is operated in a state where the lock lever is at the unlock position. That is, even if the portable key is within the authenticable range and the power switch is operated, the lock lever should be at the unlock position as a condition in order to bring about the "engine stop/conduction ON" state. As a result, the operation by a person other than those who know the operating method of the construction machine can be suppressed.

On the other hand, if the portable key is within the authenticable range in the "engine stop/conduction OFF" state, the wireless authentication starting device switches the "engine stop/conduction OFF" state to the "engine driven/conduction ON" state when the power switch is operated in a state where the lock lever is at the lock position. That is, even if the portable key is within the authenticable range and the power switch is operated, the lock lever should be at the lock position as a condition in order to bring about the "engine driven/conduction ON" state. In the case where the lock lever is at the lock position, here, driving of the hydraulic actuator is prohibited. Thus, even if the pressurized oil is delivered from the hydraulic pump with start (start-up) of the engine, unintended driving of the hydraulic actuator can be suppressed.

Moreover, since there is no need to insert the key in the key cylinder, forgetting to withdraw the key can be also eliminated. Furthermore, in addition to the lock lever at the unlock position in order to bring about the "engine stop/conduction ON" state, seating of the operator on the operator's seat can be also set as an additional condition, for example. In this case, the "engine stop/conduction ON" state cannot be brought about unless a plurality of conditions (triggers) other than the operation of the power switch are met, and the operation by a person other than those who know the operating method of the construction machine can be suppressed also in terms of this.

### BRIEF DESCRIPTION OF THE DRAWINGS

Fig. 1 is a front view showing a hydraulic excavator according to an embodiment.

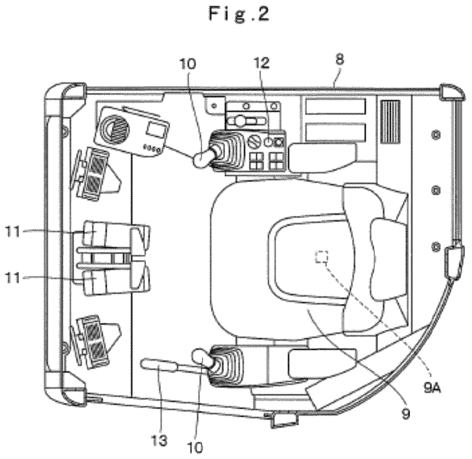

Fig. 2 is a sectional view when seen from an arrow II-II direction in Fig. 1.
Fig. 3 is an electric circuit configuration diagram of the hydraulic excavator.
Fig. 4 is an explanatory view showing a relation of transmission/reception between a portable key held by an operator and a transmission antenna and a reception antenna on the hydraulic excavator side.
Fig. 5 is a flowchart showing processing when an ACC relay is turned ON by a vehicle controller in Fig. 3.
Fig. 6 is a flowchart showing processing when an ACC relay is turned OFF by a vehicle controller in Fig. 3.

### MODE FOR CARRYING OUT THE INVENTION

Hereinafter, an embodiment of a construction machine according to the present invention will be in detail explained with reference to the accompanying drawings by taking a case where the present invention is applied to a small-sized hydraulic excavator called a mini shovel.

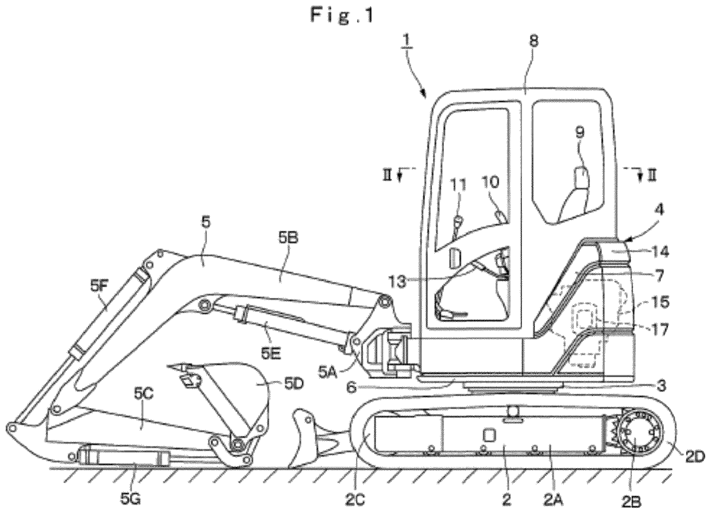

In Fig. 1, a hydraulic excavator 1 as a construction machine is a small-sized hydraulic excavator called a mini shovel suitable for a work in a narrow work site. The hydraulic excavator 1 is roughly constituted by an automotive crawler-type lower traveling structure 2, an upper revolving structure 4 mounted rotatably on the lower traveling structure 2 through a revolving device 3 and constituting a vehicle with the lower traveling structure 2, and a working mechanism 5 provided liftably on a front side of the upper revolving structure 4. The hydraulic excavator 1 performs an excavating work of earth and sand by using the working mechanism 5.

Here, the lower traveling structure 2 is constituted by a truck frame 2A, drive wheels 2B provided on both left and right sides of the truck frame 2A, idler wheels 2C provided on sides opposite to the drive wheels 2B in a front-rear direction on both left and right sides of the truck frame 2A, and a crawler belt 2D wound around the drive wheel 2B and the idler wheel 2C (only left sides of them are shown) . The left and right drive wheels 2B are rotated/driven by left and right traveling hydraulic motor (not shown) as hydraulic actuators, respectively.

The working mechanism 5 is constituted as a swing-post type working mechanism, for example. The working mechanism 5 includes a swing post 5A, a boom 5B, an arm 5C, and a bucket 5D as a working tool. In addition, the working mechanism 5 includes a swing cylinder (not shown) for causing the swing post 5A (and hence the entire working mechanism 5) to swing left and right, a boom cylinder 5E for rotationally moving the boom 5B, an arm cylinder 5F for rotationally moving the arm 5C, and a bucket cylinder 5G as a working-tool cylinder for rotationally moving (operating) the bucket 5D. The swing cylinder, the boom cylinder 5E, the arm cylinder 5F, and the bucket cylinder 5G are hydraulic actuators driven (operated) by a pressurized oil, respectively.

On the other hand, the upper revolving structure 4 is mounted on the lower traveling structure 2 through the revolving device 3 constituted by including a revolving hydraulic motor as the hydraulic actuator, a speed reducing mechanism, and a revolving bearing. The upper revolving structure 4 is revolved/driven by (the revolving hydraulic motor of) the revolving device 3 with respect to the lower traveling structure 2. Here, the upper revolving structure 4 is constituted by including a revolving frame 6, an exterior cover 7, a cab 8, and a counterweight 14 which will be described later.

The revolving frame 6 is a frame for forming a support structural body of the upper revolving structure 4, and the revolving frame 6 is mounted on the lower traveling structure 2 through the revolving device 3. The counterweight 14 and an engine 15 which will be described later are provided on a rear part side of the revolving frame 6, the cab 8 which will be described later is provided on a front left side of the revolving frame 6, and a fuel tank (not shown) is provided on a front right side of the revolving frame 6. The exterior cover 7 is provided on the revolving frame 6 from the right side of the cab 8 to the rear side and left and right side surface sides. The exterior cover 7 defines a space (engine room) for containing the engine 15, a hydraulic pump 17, a heat exchanger (not shown) and the like, together with the revolving frame 6, the cab 8, and the counterweight 14.

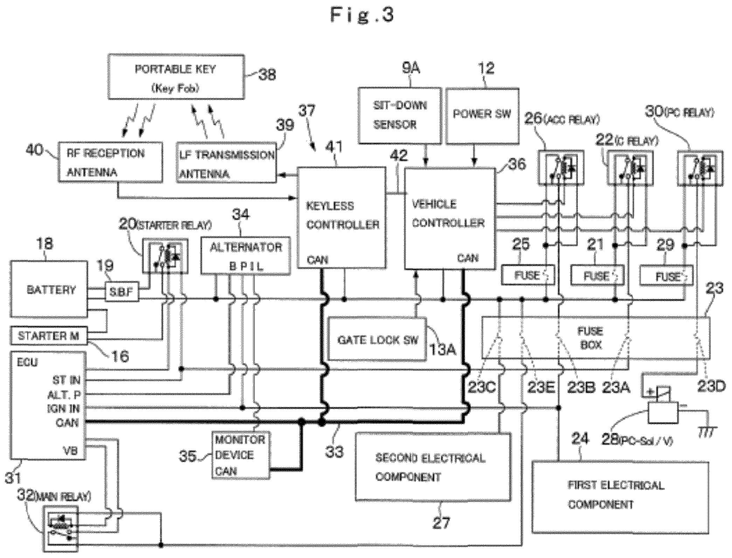

The cab 8 is mounted on the front left side of the revolving frame 6 and an inside of the cab 8 forms an operator's room on which the operator (driver) gets. An operator's seat 9 on which the operator is seated (sits down) is provided in the inside of the cab 8. A sit-down sensor 9A for detecting that the operator is seated (see Fig. 3) is provided on the operator's seat 9.

The sit-down sensor 9A can be constituted by a sensor, a switch or the like that can detect a load based on seating of the operator such as a pressure switch, a detection switch, a proximity switch, a pressure sensor and the like, for example. As shown in Fig. 3, the sit-down sensor 9A is connected to a vehicle controller 36 which will be described later, and the vehicle controller 36 can determine whether the operator is seated on the operator's seat 9 or not (not on the seat) on the basis of a detection signal of the sit-down sensor 9A.

A ceiling sensor (an infrared sensor, an image sensor, an optical sensor, a laser, and a camera, for example) provided on a ceiling of the cab 8, for example, can be also used for detection of seating of the operator instead of the sit-down sensor 9A. That is, various sensors and switches including a sit-down switch, sit-down sensor, and a human-body sensor can be used as long as it is a sensor (operator detection unit) that can detect whether the operator is present or not.

On the other hand, an operating lever 10 for work of operating the working mechanism 5 is provided on both left and right sides of the operator's seat 9. An operating lever/pedal 11 for traveling operated by a manual operation or a stepping-on operation when the lower traveling structure 2 is made to run are provided on a front of the operator's seat 9.

Moreover, a power switch 12 is provided in the vicinity of the operator's seat 9 or more specifically, on a right side of the operator's seat 9 and on a rear side of the right operating lever 10. The power switch 12 is constituted by a switch (a main switch, a primary switch, a start switch, and a start/stop switch) for starting the engine 15, for example, by a push-type switch. The power switch 12 is operated (pushed) by the operator. As shown in Fig. 3, the power switch 12 is connected to the vehicle controller 36 which will be described later and when it is operated (pushed) by the operator, a signal (ON signal) of the fact is output to the vehicle controller 36. The operator can perform start, stop or the like of the engine 15 which will be described later by sitting on the operator's seat 9 and by operating (pushing) the power switch 12.

On the other hand, a gate lock lever 13 as a lock lever is provided on a left side of the operator's seat 9 or more specifically, on a lower side of the work operating lever 10 on the left side and at a position corresponding to a gate of the cab 8 . The gate lock lever 13 is rotationally displaced between a boarding regulated position (hereinafter referred to as an unlock position) where the gate of the cab 8 is shut down and a boarding permitted position (hereinafter referred to a lock position) where the gate is opened. Here, the unlock position shutting down the gate corresponds to a state where the gate lock lever 13 is lowered, while the lock position opening the gate corresponds to a state where the gate lock lever 13 is raised. In Fig. 1, the gate lock lever 13 in the lowered state (unlock position) is shown.

The gate lock lever 13 is switched to the lock position (raised position) and the unlock position (lowered position) by the operation of the operator. In this case, when the gate lock lever 13 is set to the lock position, driving of the hydraulic actuator of the hydraulic excavator 1, that is, various hydraulic actuators including each of the cylinders 5E, 5F, and 5G, the traveling hydraulic motor, and the revolving hydraulic motor is prohibited. On the other hand, when the gate lock lever 13 is set to the unlock position, driving of the hydraulic actuator is permitted.

Here, a gate lock switch 13A (see Fig. 3) is provided on the gate lock lever 13. The gate lock switch 13A is to detect (detector) a position of the gate lock lever 13. As shown in Fig. 3, the gate lock switch 13A is connected to the vehicle controller 36 which will be described later. The vehicle controller 36 can determine which of the lock position and the unlock position the gate lock lever 13 is set on the basis of the detection signal (ON/OFF signal) of the gate lock switch 13A. In this case, the gate lock switch 13A can be constituted as a normally-open switch (switch urged to an open position by a spring) which is in the conduction OFF state when the gate lock lever 13 is at the lock position and in the conduction ON state when the lever is at the unlock position. Moreover, as shown in Fig. 3, the vehicle controller 36 is connected to a pilot cut relay 30 which will be described later. In this case, a battery 18 and a pilot cut solenoid valve 28 which will be described later are connected through the pilot cut relay 30.

When the gate lock lever 13 is set to the lock position, a pilot pressure (switching signal) for switching (displacing a spool) a control valve (control valve device), not shown, is shut off, and the control valve is maintained in a neutral state, for example. More specifically, when the vehicle controller 36 determines that the gate lock lever 13 is at the lock position by the gate lock switch 13A, it brings the pilot cut relay 30 to an OFF (open) state and brings the pilot cut solenoid valve 28 to a shut-off (closed) state. As a result, the pressurized oil delivered from the hydraulic pump 17 is returned to a hydraulic oil tank (not shown) without being supplied to the hydraulic actuator, and driving of the hydraulic actuator is prohibited.

On the other hand, when the gate lock lever 13 is set to the unlock position, the pilot pressure can be supplied to the control valve through the operating lever 10 for work and the operating lever/pedal 11 for traveling. More specifically, when the vehicle controller 36 determines that the gate lock lever 13 is at the unlock position by the gate lock switch 13A, it brings the pilot cut relay 30 to the ON (closed) state and brings the pilot cut solenoid valve 28 to a conducted (open) state on the basis of supply of power (power feeding) from the battery 18. In this case, the control valve is switched (spool is displaced) on the basis of the operation of the operating lever 10 and the operating lever/pedal 11 for traveling by the operator, and driving of the hydraulic actuator is permitted. As described above, the hydraulic excavator 1 is to perform a work by driving of the hydraulic actuator in the state where the gate lock lever 13 is switched to the unlock position.

The counterweight 14 is to take a weight balance with the working mechanism 5. The counterweight 14 is located on a rear side of the engine 15 which will be described later and is mounted on a rear end portion of the revolving frame 6. A rear surface side of the counterweight 14 is formed having an arc shape. The counterweight 14 is constituted to be contained in a vehicle body width of the lower traveling structure 2.

The engine 15 is arranged in a laterally placed state on the rear side of the revolving frame 6. The engine 15 is constituted by using a small-sized diesel engine, for example, and severs as a power source (driving source) of the hydraulic pump 17 which will be described later. Here, the engine 15 is constituted by an electronically controlled engine, and a fuel supply amount is variably controlled by a fuel injecting device including an electronically controlled injection valve (injector), for example. That is, the fuel injecting device variably controls a fuel injection amount to be injected into a cylinder (not shown) of the engine 15 on the basis of a control signal output from an engine control unit (ECU) 31 which will be described later (see Fig. 3).

An electrical device (auxiliary device) of the engine 15, that is, a starter motor 16 (see Fig. 3) as electric equipment of the engine 15 is provided on the engine 15. As shown in Fig. 3, the starter motor 16 is connected to the battery 18 through a starter relay 20, which will be described later, and the like. The starter motor 16 is to rotate a crank shaft of the engine 15 when the engine 15 is to be started. That is, when the starter relay 20 is turned ON (closed), the starter motor 16 is rotated on the basis of supply of power (power feeding) from the battery 18, and the engine 15 can be started. When the engine 15 is started, the starter relay 20 is turned OFF (open), and the starter motor 16 is stopped.

As shown in Fig. 1, the hydraulic pump 17 is mounted on the left side of the engine 15. The hydraulic pump 17 constitutes a hydraulic source together with the hydraulic oil tank (not shown) . That is, the hydraulic pump 17 suctions the hydraulic oil from the hydraulic oil tank by being driven by the engine 15 and supplies (delivers) the suctioned hydraulic oil toward the control valve, not shown, as the pressurized oil. The hydraulic pump 17 is constituted by a variable-capacity swash-plate, inclined axis or radial piston hydraulic pump, for example. The hydraulic pump 17 is not necessarily limited to the variable-capacity hydraulic pump but it may be constituted by using a fixed capacity hydraulic pump, for example.

On the other hand, the control valve is switched in accordance with the pilot pressure supplied on the basis of the operation of the operating lever 10 for work and the operating lever/pedal 11 for traveling. As a result, the control valve selectively supplies/discharges (supply or discharge) the pressurized oil delivered from the hydraulic pump 17 to various hydraulic actuators including each of the cylinders 5E, 5F, and 5G, the traveling hydraulic motor, and the revolving hydraulic motor. The hydraulic actuator is driven by the pressurized oil supplied from the hydraulic pump 17 through the control valve.

Next, constitution of the electric circuit of the hydraulic excavator 1 will be described by referring to Fig. 3.

In Fig. 3, the battery 18 serves as a power supply for electrical devices including the engine 15 (a power supply for auxiliary devices, a battery for auxiliary devices, a power supply for electrical devices, and a battery for electrical components). More specifically, the battery 18 serves as a power supply for the electrical components for driving (operating) the engine 15 such as the starter motor 16 provided in the engine 15, the fuel injecting device (injector), various sensors and moreover the engine control unit 31 (hereinafter referred to as the ECU 31), for example. In addition, the battery 18 serves as a power supply for various electrical devices mounted on the hydraulic excavator 1 such as a first electrical component 24, a second electrical component 27, a monitor device 35, the vehicle controller 36, a keyless controller 41 and the like.

Here, the starter motor 16 is connected to the battery 18 through a slow blow fuse (S.B.F.) 19 (hereinafter referred to as an SB fuse 19) and the starter relay 20 and constitutes a starter circuit. The starter relay 20 is connected to the battery 18 through the SB fuse 19, a C fuse 21, a C relay 22, and a C fuse 23A in a fuse box 23 and constitutes a C-relay circuit.

The C relay 22 is switched to ON (closed) and OFF (open) by the vehicle controller 36 which will be described later. In this case, when the C relay 22 is turned ON (closed), an electric current flows through the ECU 31 and the starter relay 20. As a result, the ECU 31 turns ON (closes) the starter relay 20, and the starter motor 16 and the battery 18 are electrically conducted. As a result, the starter motor 16 is rotated, and the engine 15 can be started. When the engine 15 is started, the starter relay 20 is turned OFF (open).

The first electrical component (accessory electrical components, ACC electrical components) 24 is connected to the battery 18 through the SB fuse 19, an accessory fuse 25 (hereinafter referred to as the ACC fuse 25), an accessory relay 26 (hereinafter referred to as the ACC relay 26), and an ACC fuse 23B in the fuse box 23 and constitutes an accessory circuit (ACC circuit). The first electrical component 24 corresponds to an electrical device electrically conducted with (connected to) the battery 18 in accordance with a state (status) of the wireless authentication starting device 37 which will be described later, in other words, when the ACC relay 26 connected to the vehicle controller 36 is ON (closed).

The first electrical component 24 is not electrically conducted with (not connected to) the battery 18 when the ACC relay 26 connected to the vehicle controller 36 is OFF (open). The first electrical component 24 includes a part of the monitor device 35, a part of the controllers (a controller other than the vehicle controller 36 and the keyless controller 41, for example), an air conditioning device (air conditioner), a wiper, various solenoid valves and the like. The first electrical component 24 also includes an electrical device required for driving the engine 15 such as the fuel injecting device (injector) of the engine 15, for example.

On the other hand, the second electrical component (battery directly-connected electrical components, B electrical components) 27 is connected to the battery 18 through the SB fuse 19 and a B fuse 23C in the fuse box 23. The second electrical component 27 corresponds to the electrical device (normally) connected to the battery 18 regardless of the state (status) of the wireless authentication starting device 37 which will be described later or in other words, regardless of ON (closed) /OFF (open) of the C relay 22, the ACC relay 26, and the pilot cut relay 30 which will be described later connected to the vehicle controller 36. The second electrical component 27 includes a part of the monitor device 35, a part of the controller (the vehicle controller 36 and the keyless controller 41, for example), a horn, a light and the like.

The pilot cut solenoid valve 28 is provided between a pilot pump, not shown, and the control valve and is a valve (pilot switching valve) to switch between permission and prohibition of supply of the pilot pressure to the control valve, that is, between conduction (open) and shut-off (closed) of the pilot pressurized oil. The pilot cut solenoid valve 28 is connected to the battery 18 through the SB fuse 19, the pilot cut fuse 29, the pilot cut relay 30, and a PC fuse 23D in the fuse box 23. Here, the pilot cut relay 30 is connected to the vehicle controller 36. The vehicle controller 36 switches ON (closed) /OFF (open) of the pilot cut relay 30 in accordance with a signal of the gate lock switch 13A corresponding to the position of the gate lock lever 13.

When the pilot cut relay 30 is ON (closed), the pilot cut solenoid valve 28 and the battery 18 are electrically conducted (connected), and the pilot cut solenoid valve 28 is brought into the electrically conducted (open) state (supply position). As a result, the pilot pressure can be supplied to the control valve through the operating lever 10 for work and the operating lever/pedal 11 for traveling, and driving of the hydraulic actuator (the swing cylinder, the boom cylinder 5E, the arm cylinder 5F, the bucket cylinder 5G, the revolving hydraulic motor, the traveling hydraulic motor) is permitted. On the other hand, when the pilot cut relay 30 is OFF (open), the pilot cut solenoid valve 28 and the battery 18 are not electrically conducted (not connected), and the pilot cut solenoid valve 28 enters the shut-off (closed) state (shut-off position) . In this case, the pilot pressure cannot be supplied to the control valve, and driving of the hydraulic actuator is prohibited.

The ECU 31 is a control device for controlling the engine 15 (rotation number control, for example) and is constituted by a microcomputer or the like, for example. The ECU 31 is connected to various sensors and the fuel injecting device (injector) provided in the engine 15. The ECU 31 operates the engine 15 at a rotation number according to a driving operation of the operator, an operated state of the vehicle and the like by variably controlling the fuel injection amount (fuel supply amount) into the cylinder of the engine 15, for example. In this case, the ECU 31 controls the fuel injection amount of the fuel injecting device on the basis of an instruction of an engine rotation number instruction dial operated by the operator and an instruction from the vehicle controller 36, for example.

Here, the ECU 31 is connected to the battery 18 through the SB fuse 19, an ECU fuse 23E in the fuse box 23, and a main relay 32. Moreover, the ECU 31 is connected to the starter relay 20, an alternator 34, and the ACC relay 26. The main relay 32 is switched ON (closed) /OFF (open) by the ECU 31. That is, when the ACC relay 26 is turned ON (closed), the electric current flows to the ECU 31 from the ACC relay 26, and the ECU 31 turns on (closes) the main relay 32. As a result, the ECU 31 is brought into the state conducted to (connected with) the battery 18. Moreover, the ECU 31 is mutually connected to the monitor device 35, the vehicle controller 36, the keyless controller 41 and the like through a communication line 33 and constitutes a CAN (Control Area Network).

The alternator 34 is to generate power by being driven by the engine 15. The alternator 34 feeds power to the first electrical component 24, the second electrical component 27, the ECU 31, the monitor device 35, the vehicle controller 36, the keyless controller 41 and the like in addition to electric storage (charging) of the battery 18. Here, the alternator 34 has a B terminal connected to the battery 18 through the SB fuse 19, a P terminal and an I terminal connected to the ECU 31, and an L terminal connected to the monitor device 35.

The monitor device 35 is provided in the cab 8 of the hydraulic excavator 1, for example, and is to notify an operation state or the like of the hydraulic excavator 1 to the operator manipulating the hydraulic excavator 1. More specifically, the monitor device 35 displays information to be notified to the operator such as various types of status amounts such as an engine rotation number, a fuel remaining amount, an oil remaining amount and the like and malfunction information, alarm information and the like of the various devices including the engine 15 and the hydraulic devices. The monitor device 35 is constituted by including a display screen, a display light (alarm lamp), a selection switch (operating switch), for example, and severs as a notifying device for notifying the information to the operator together with a horn serving as an acoustic device.

The vehicle controller 36 is a control device (controller, a control unit) for comprehensively managing the monitor device 35, the ECU 31, and the keyless controller 41 and is constituted by including a microcomputer or the like, for example. The vehicle controller 36 constitutes the wireless authentication starting device 37 together with the keyless controller 41.

Next, the wireless authentication starting device 37 performing start/stop of the engine 15 will be described.

The wireless authentication starting device 37 switches conduction (connection) and non-conduction (non-connection) between the battery 18 and the electrical devices on the basis of the authentication of the portable key (mobile machine) 38 held by the operator and the operation of the power switch 12 by the operator. More specifically, the wireless authentication starting device 37 switches conduction (connection) and non-conduction (non-connection) between the battery 18 and the first electrical component 24 and conduction (connection) and non-conduction (non-connection) between the battery 18 and the starter motor 16 on the basis of the authentication of the portable key 38 by wireless communication and the operation of the power switch 12. Here, the wireless authentication starting device 37 is constituted by including the portable key 38, an LF transmission antenna 39, an RF receipt ion antenna 40, the keyless controller 41, the vehicle controller 36, the ACC relay 26, and the C relay 22. In this case, the keyless controller 41 executes authentication by wireless communication with the portable key 38 and the vehicle controller 36 switches conduction (connection) and non-conduction (non-connection) between the battery 18 and the electrical device on the basis of the authentication result (authenticated state or unauthenticated state) and condition of the operation of the power switch 12.

The portable key (Key Fob) 38 as an authentication key (authenticating machine) is to be held (carried) by the operator who operates (manipulates) the hydraulic excavator 1, for example. When the portable key 38 receives a signal (request signal) transmitted from the keyless controller 41 through the LF transmission antenna 39, it transmits (issues) an ID code (authentication signal, authentication number) for authentication to the keyless controller 41. For this purpose, the portable key 38 includes a receiver for receiving the request signal, a transmitter for transmitting the ID code for authentication to (the RF reception antenna 40 of) the keyless controller 41, the microcomputer for controlling them, a battery for supplying power to them, a transponder in which the ID code for authentication is set and the like (none of them is shown). The transponder is to check (authenticate) the ID by being brought close to an antenna for transponder (not shown) provided in the vehicle when the battery of the portable key 38 runs out.

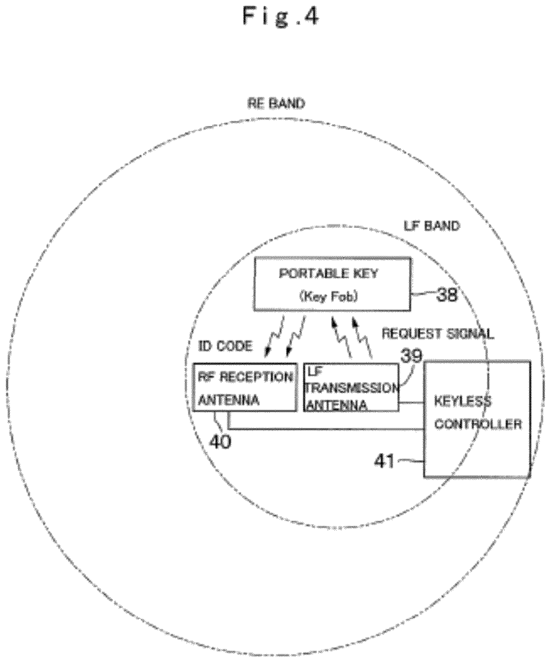

As shown in Fig. 4, the portable key 38 receives the request signal (authentication request signal) transmitted from the LF transmission antenna 39 by the receiver when it enters into a transmission range (LF band) of the LF transmission antenna 39 connected to the keyless controller 41. The portable key 38 transmits (replies) the ID code for authentication set in the portable key 38 through the transmitter on the basis of this reception.

On the other hand, the LF transmission antenna 39 as the transmission antenna, the RF reception antenna 40 as the reception antenna, and the keyless controller 41 are provided in the upper revolving structure 4 on the vehicle side (in the cab 8, for example). The LF transmission antenna 39 is connected to the keyless controller 41 and normally transmits (issues) the request signal that the ID code (authentication signal) is transmitted to the portable key 38 at a predetermined control cycle (0.5-second cycle, for example) . The RF reception antenna 40 is connected to the keyless controller 41 to receive the ID code transmitted from the portable key 38. As shown in Fig. 4, in the embodiment, the transmission range (LF band) of the LF transmission antenna 39 is smaller than a reception range (RF band) of the RF reception antenna 40.

The transmission range (LF band) of the LF transmission antenna 39 is a range with a diameter of approximately 1 m around the operator's seat 9, for example, and the reception range (RF band) of the RF reception antenna 40 is a range with a diameter of approximately 10 m around the operator's seat 9, for example. A portion where the transmission range of the LF transmission antenna 39 and the reception range of the RF reception antenna 40 are overlapped with each other (duplicated range), that is, the transmission range of the LF transmission antenna 39 in Fig. 4 corresponds to the authentication range of the portable key 38 (authenticable range, authentication region). A relation between the transmission range of the LF transmission antenna 39 and the reception range of the RF reception antenna 40 is not limited to Fig. 4.

The keyless controller (controller for authentication) 41 is constituted by a microcomputer and is connected to the vehicle controller 36 through the communication line 33 and an analog signal line 42 which is a communication line different from the communication line 33. The keyless controller 41 serves as a control device (controller, control unit) for wireless authentication executing authentication of the portable key 38 by wireless communication. That is, the keyless controller 41 transmits the request signal to the authenticable range through the LF transmission antenna 39. In addition, the keyless controller 41 authenticates (determines) whether or not the ID code from the portable key 38 received through the RF reception antenna 40 is a valid ID code, that is, whether or not it matches the ID code set in the keyless controller 41 in advance for which start of the engine 15 is permitted. The keyless controller 41 outputs an authentication result (determination result) at all times to the vehicle controller 36 at a predetermined control cycle (0.5-second cycle, for example).

In this case, the keyless controller 41 outputs valid authentication or unauthentication, for example, as an authentication result to the vehicle controller 36 (through the communication line 33, for example). The valid authentication is the fact that the portable key 38 transmitting the valid ID code is present in the transmission range (the LF band in Fig. 4) of the LF transmission antenna 39 (that the portable key 38 is within the authenticable range). The unauthentication is the fact that there is no portable key 38 transmitting the valid ID code within the transmission range of the LF transmission antenna 39 (that there is no portable key 38 within the authenticable range) .

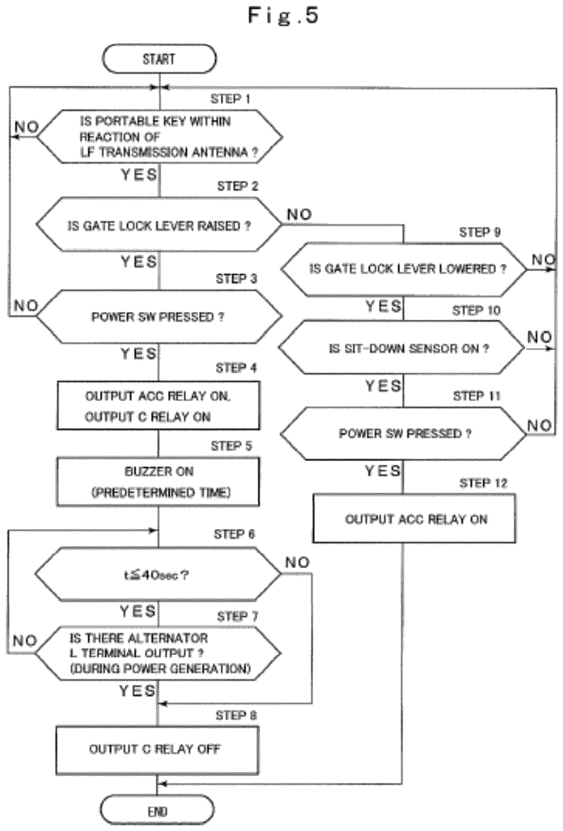

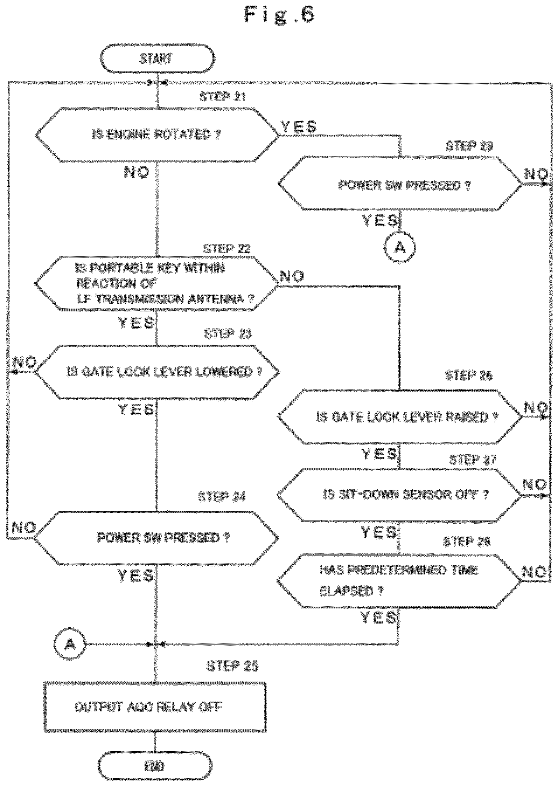

The vehicle controller 36 performs ON (closed)/OFF (open) of the ACC relay 26 and ON (closed) /OFF (open) of the C relay 22 on the basis of the authentication result of the keyless controller 41 and condition of the operation of the power switch 12. Thus, the vehicle controller 36 is constituted by including a microcomputer or the like, for example, and is connected to the keyless controller 41, the power switch 12, the sit-down sensor 9A, the gate lock switch 13A, the ACC relay 26, the C relay 22 and the like. The vehicle controller 36 has a storage portion (not shown) constituted by a ROM, a RAM and the like and this storage portion saves (stores) a processing program for turning ON the ACC relay 26 shown in Fig. 5 which will be described later, a processing program for turning OFF the ACC relay 26 shown in Fig. 6 which will be described later, for example.

The vehicle controller 36 switches ON/OFF of the AC relay 26 and ON/OFF of the C relay 22 on the basis of the authentication result of the keyless controller 41 (whether or not the portable key 38 is within the authenticable range), whether or not the power switch 12 has been operated, whether or not the operator is seated on the operator's seat by the sit-down sensor 9A, which position of the gate lock lever 13 by the gate lock switch 13A it is (whether it is the lock position or the unlock position) and the like.

Here, in the case where the vehicle controller 36 turns OFF the ACC relay 26 and also turns OFF the C relay 22, the state where the engine 15 is stopped and the electrical devices (the first electrical component 24 and the starter motor 16) are not conducted (not connected), that is, the "engine stop/conduction OFF" state can be brought about.

In the case where the vehicle body controller 36 turns ON the ACC relay 26 and also turns ON the C relay 22 from the "engine stop/conduction OFF" state and after that (after driving of the engine 15), it turns OFF the C relay 22, the state where the engine 15 is driven and the electrical device (the first electrical component 24) is conducted (connected), that is, the "engine driven/conduction ON" state can be brought about.

Moreover, in the case where the vehicle body controller 36 turns ON only the ACC relay 26 from the "engine stop/conduction OFF" state, the state where the engine 15 is stopped and the electrical device (the first electrical component 24) is conducted (connected), that is, the "engine stop/conduction ON" state can be brought about.

Here, in the case of the "engine stop/conduction OFF" state, the vehicle controller 36 switches the "engine stop/conduction OFF" state to the "engine driven/conduction ON" state when the portable key 38 is within the authenticable range (LF band), the gate lock lever 13 is at the lock position (raised position), and the power switch 12 is operated. On the other hand, in the
case of the "engine stop/conduction OFF" state, the vehicle controller 36 switches the "engine stop/conduction OFF" state to the "engine stop/conduction ON" state when the portable key 38 is within the authenticable range, the gate lock lever 13 is
at the unlock position (lowered position), and the power switch 12 is operated.

In the case of the "engine driven/conduction ON" state, when the power switch 12 is operated, the vehicle controller 36 switches the "engine driven/conduction ON" state to the engine stop/conduction OFF" state. It should be noted that the vehicle controller 36 maintains the "engine driven/conduction ON" state even in the case where the portable key 38 goes out of the authenticable range during the "engine driven/conduction ON" state. As a result, the "engine driven/conduction ON" state is prevented from being switched to the "engine stop/conduction OFF" state even in the case where the operator leaves the hydraulic excavator 1 while holding the portable key 38 with the "engine driven/conduction ON" state during work for check of the excavating state or the like, for example.

On the other hand, in the case of the "engine stop/conduction ON" state, the vehicle controller 36 switches the "engine stop/conduction ON" state to the "engine stop/conduction OFF" state when the gate lock lever 13 is at the unlock position and the power switch 12 is operated. In the case of the "engine stop/conduction ON" state, when the gate lock lever 13 is at the lock position and the operator has left the operator's seat 9, the vehicle controller 36 switches the "engine stop/conduction ON" state to the "engine stop/conduction OFF" state when the portable key 38 goes out of the authenticable range even if there is no operation of the power switch 12. As a result, in the case where the operator who set the "engine stop/conduction ON" state leaves the hydraulic excavator 1 without switching it to the "engine stop/conduction OFF" state, for example, the state is automatically switched to the "engine stop/conduction OFF" state when the portable key 38 goes out of the authenticable range.

Moreover, when the vehicle controller 36 switches the "engine stop/conduction ON" state to the "engine stop/conduction OFF" state, a notification sound (a buzzer, an alarm, for example) for notifying it to the operator is output from the acoustic device (not shown) in the cab 8, for example. As a result, the operator who heard this notification sound can recognize that the "engine stop/conduction ON" state has been switched to the "engine stop/conduction OFF" state. Processing in Figs. 5 and 6 executed by the vehicle controller 36 will be described later.

The hydraulic excavator 1 according to the embodiment has the constitution as above and its operation will be described below.

The operator of the hydraulic excavator 1 gets on the cab 8 of the upper revolving structure 4 while holding the portable key 38. When the operator in the cab 8 is seated on the operator's seat 9 and presses on the power switch 12 while the gate lock lever 13 is at the lock position, the vehicle controller 36 turns ON the ACC relay 26 and also turns ON the C relay 22. As a result, conduction to the first electrical component 24 and the starter motor 16 is started. As a result, the starter motor 16 is rotated, and the engine 15 is started. After the engine 15 is started, the vehicle controller 36 turns OFF the C relay 22.

When the engine 15 is started, the hydraulic pump 17 is driven by the engine 15. When the operator operates the gate lock lever 13 from the lock position to the unlock position, driving of the hydraulic actuators (the swing cylinder, the boom cylinder 5E, the arm cylinder 5F, the bucket cylinder 5G, the revolving hydraulic motor, the traveling hydraulic motor) is permitted.

For example, the operator can allow the lower traveling structure 2 to go forward or backward by operating the operating lever/pedal 11 for traveling. The operator can move the working mechanism 5 upward/downward so as to perform the excavating work of earth and sand and the like by operating the operating lever 10 for work. In this case, since the small-sized hydraulic excavator 1 has a small revolving radius by the upper revolving structure 4, it can perform a ditch digging work or the like while revolving/driving the upper revolving structure 4 even in a narrow work site such as a spot in an urban area.

When the work is finished and the operator presses on the power switch 12, the vehicle controller 36 turns OFF the ACC relay 26. As a result, the conduction to the first electrical component 24 is shut off, and the engine 15 is stopped. In the state where the engine 15 of the hydraulic excavator 1 is stopped, when the operator is seated on the operator's seat 9, sets the gate lock lever 13 to the unlock position and presses the power switch 12, the vehicle controller 36 turns ON only the ACC relay 26 (the C relay 22 is kept at OFF). As a result, the first electrical component 24 can be electrically conducted without starting (driving) the engine 15. If the operator presses on the power switch 12 in this state, for example, the vehicle controller 36 turns OFF the ACC relay 26, and the conduction to the first electrical component 24 is shut off.

Next, processing executed by the vehicle controller 36 will be described by using flowcharts in Figs. 5 and 6. The processing in Fig. 5 is executed by the vehicle controller 36 when the ACC relay 26 is OFF. The processing in Fig. 6 is executed by the vehicle controller 36 when the ACC relay 26 is ON.

First, the processing in Fig. 5 will be described. When the processing operation in Fig. 5 is started by turning-OFF of the ACC relay 26, that is, the "engine stop/conduction OFF" state, it is determined at Step 1 whether or not the portable key 38 is within a reaction (within an authenticable range) of the LF transmission antenna 39. This determination can be made by the authentication result normally output at the predetermined control cycle from the keyless controller 41 to the vehicle controller 36. That is, in the case where the portable key 38 is within the reaction of the LF transmission antenna 39, the ID code for authentication is transmitted (issued) from the portable key 38 to the keyless controller 41. The keyless controller 41 determines whether or not the ID code received from the portable key 38 is a valid ID code and if it is a valid ID code, the keyless controller 41 outputs an authentication result that there is the authenticated portable key 38 within the authenticable range to the vehicle controller 36. On the other hand, if the ID code for authentication is not received or the received ID code is not valid, the keyless controller 41 outputs the authentication result that the portable key 38 is not within the authenticable range to the vehicle controller 36.

In the case where it is determined at Step 1 to be "YES", that is, that the portable key 38 is within the reaction of the LF transmission antenna 39, the routine proceeds to Step 2. On the other hand, in the case where it is determined at Step 1 to be "NO", that is, that the portable key 38 is not within the reaction of the LF transmission antenna 39, the routine returns to before Step 1 and repeats the processing at Step 1.

At Step 2, it is determined whether or not the gate lock lever 13 is at the raised position (lock position) . This determination can be made on the basis of a signal (ON/OFF signal) of the gate lock switch 13A. In the case where it is determined at Step 2 to be "YES", that is, that the gate lock lever 13 is at the raised position (lock position), the routine proceeds to Step 3. On the other hand, in the case where it is determined at Step 2 to be "NO", that is, that the gate lock lever 13 is not at the raised position (lock position), the routine proceeds to Step 9.

At Step 3, it is determined whether or not the power switch 12 has been operated (pressed). This determination can be made on the basis of a signal (ON signal) of the power switch 12. In the case where it is determined at Step 3 to be "NO", that is, that the power switch 12 has not been operated (the ON signal has not been output), the routine returns to before Step 1 and repeats the processing at Step 1 and after.

On the other hand, in the case where it is determined at Step 3 to be "YES", that is, that the power switch 12 has been operated (the ON signal has been output), the routine proceeds to Step 4 and turns ON both the ACC relay 26 and the C relay 22. As a result, conduction to the first electrical component 24 and the starter motor 16 is started, and the starter motor 16 is rotated. Then, at the subsequent Step 5, a buzzer or an alarm is made for a predetermined time. That is, the notification sound (a buzzer, an alarm) that the engine 15 is started (started-up) is output from the acoustic device in the cab 8, for example.

At the subsequent Step 6, it is determined whether or not elapsed time t since the C relay 22 was turned ON is predetermined time (40 seconds, for example) or less. In the case where it is determined at Step 6 to be "YES", that is, that the elapsed time t is the predetermined time or less, the routine proceeds to Step 7, and it is determined whether or not the alternator 34 has started power generation. That is, in the case where the engine 15 is started, power generation is made by the alternator 34. At Step 7, it is determined whether or not the engine 15 has been started on the basis of whether or not the alternator 34 has started power generation. Whether or not the alternator 34 is generating power can be determined on the basis of whether or not there is an output of an L terminal of the alternator 34, for example.

In the case where it is determined at Step 7 to be "NO", that is, that the alternator 34 is not generating power (the engine 15 has not been started), the routine returns to before Step 6 and repeats the processing at Step 6 and after. On the other hand, in the case where it is determined at Step 7 to be "YES", that is, that the alternator 34 is generating power (the engine 15 has been started) or in the case where it is determined at Step 6 to be "NO", that is, that the elapsed time t since the C relay 22 was turned ON exceeds the predetermined time (40 seconds, for example), the routine proceeds to Step 8, turns OFF the C relay 22, and finishes the control processing in Fig. 5 (starts processing in Fig. 6). In this case, in the case where the engine 15 has been started, the "engine driven/conduction ON" state is brought about, while in the case where the engine 15 has not been started, the "engine stop/conduction ON" state is brought about.

On the other hand, in the case where it is determined at Step 2 to be "YES" and the routine proceeds to Step 9, it is determined at Step 9 whether or not the gate lock lever 13 is at the lowered position (unlock position). If it is determined at Step 9 to be "NO", that is, that the gate lock lever 13 is not at the lowered position (unlock position), the routine returns to before Step 1 and repeats the processing at Step 1 and after. On the other hand, in the case where it is determined at Step 9 to be "YES", that is, that the gate lock lever 13 is at the lowered position (unlock position), the routine proceeds to Step 10.

At Step 10, it is determined whether or not the operator is seated on the operator's seat 9, that is, whether or not the ON signal is output from the sit-down sensor 9A. In the case where it is determined at Step 10 to be "NO", that is, that the ON signal is not output from the sit-down sensor 9A (the operator is not seated on the operator's seat 9), the routine returns to before Step 1 and repeats the processing at Step 1 and after. On the other hand, in the case where it is determined at Step 10 to be "YES", that is, that the ON signal is output from the sit-down sensor 9A (the operator is seated on the operator's seat 9), the routine proceeds to Step 11.

At Step 11, it is determined whether or not the power switch 12 has been operated (pressed) . In the case where it is determined at Step 11 to be "NO", that is, that the power switch 12 has not been operated (the ON signal has not been output), the routine returns to before Step 1 and repeats the processing at Step 1 and after. On the other hand, in the case where it is determined at Step 11 to be "YES", that is, that the power switch 12 has been operated (the ON signal has been output), the routine proceeds to Step 12 and turns ON the ACC relay 26. As a result, conduction to the first electrical component 24 is started. When the ACC relay 26 is turned ON at Step 12, the control processing in Fig. 5 is finished (the processing in Fig. 6 is started). In this case, the "engine stop/conduction ON" state is brought about.

Next, the processing in Fig. 6 will be described. Upon turning-ON of the ACC relay 26, that is, the "engine driven/conduction ON" state or the "engine stop/conduction ON" state starts the processing operation in Fig. 6, it is determined at Step 21 whether or not the engine 15 is rotating, that is, the engine 15 is being driven. This determination can be made on the basis of whether or not the alternator 34 is generating power similarly to Step 7 in Fig. 5, for example. In the case where it is determined at Step 21 to be "NO", that is, that the engine 15 is stopped, the routing proceeds to Step 22. In this case, the state is the "engine stop/conduction ON" state. On the other hand, in the case where it is determined at Step 21 to be "YES", that is, that the engine 15 is being driven, the routine proceeds to Step 29. In this case, the state is the "engine driven/conduction ON" state.

At Step 22, it is determined whether or not the portable key 38 is within the reaction (within the authenticable range) of the LF transmission antenna 39. In the case where it is determined at Step 22 to be "YES", that is, that the portable key 38 is within the reaction of the LF transmission antenna 39, the routine proceeds to Step 23. At Step 23, it is determined whether or not the gate lock lever 13 is at the lowered position (unlock position) . In the case where it is determined at Step 23 to be "NO", that is, that the gate lock lever 13 is not at the lowered position (unlock position), the routine returns to before Step 21 and repeats the processing at Step 21 and after. On the other hand, in the case where it is determined at Step 23 to be "YES", that is, that the gate lock lever 13 is at the lowered position (unlock position), the routine proceeds to Step 24.

At Step 24, it is determined whether or not the power switch 12 has been operated (pressed) . In the case where it is determined at Step 24 to be "NO", that is, that the power switch 12 has not been operated (the ON signal has not been output), the routine returns to before Step 21 and repeats the processing at Step 21 and after. On the other hand, in the case where it is determined at Step 24 to be "YES", that is, that the power switch 12 has been operated (the ON signal has been output), the routine proceeds to Step 25 and turns OFF the ACC relay 26. At this time, a notification sound (a buzzer, an alarm, for example) for notifying it from the acoustic device (not shown) in the cab 8 is output, for example. In this case, since the conduction of the first electrical component 24 is shut off, the "engine stop/conduction OFF" state is brought about. When the ACC relay 26 is turned OFF at Step 25, the control processing in Fig. 6 is finished (the processing in Fig. 5 is started).

On the other hand, in the case where it is determined at Step 22 to be "NO", that is, that the portable key 38 is not within the reaction of the LF transmission antenna 39, the routine proceeds to Step 26. At Step 26, it is determined whether or not the gate lock lever 13 is at the raised position (lock position) . In the case where it is determined at Step 26 to be "NO", that is, the gate lock lever 13 is not at the raised position (lock position) (at the lowered position, which is the unlock position), the routine returns to before Step 21 and repeats the processing at Step 21 and after. On the other hand, in the case where it is determined at Step 26 to be "YES", that is, that the gate lock lever 13 is at the raised position (lock position), the routine proceeds to Step 27.

At Step 27, it is determined whether or not the operator has left the operator's seat 9, that is, the OFF signal is output from the sit-down sensor 9A (ON signal is not output) . In the case where it is determined at Step 27 to be "NO", that is, that the OFF signal is not output from the sit-down sensor 9A (the ON signal is output from the sit-down sensor 9A and the operator is seated on the operator's seat 9), the routine returns to before Step 21 and repeats the processing at Step 21 and after. On the other hand, in the case where it is determined at Step 27 to be "YES", that is, the OFF signal is output from the sit-down sensor 9A (the ON signal is not output from the sit-down sensor 9A and the operator has left the operator's seat 9), the routine proceeds to Step 28.

At Step 28, it is determined whether or not the predetermined time has elapsed since it is determined to be NO at Step 22, that is, since the portable key 38 has gone out of the reaction of the LF transmission antenna 39. This predetermined time can be set as appropriate time since the portable key 38 has gone out of the authenticable range until the conduction of the first electrical component 24 is shut off. Whether or not the predetermined time has elapsed can be determined by using a flag, for example. Specifically, it is configured that, in the case where it is determined to be NO at Step 22, the flag is turned ON, and the flag is not turned OFF until determination to be YES is made at Step 22 after that. In this case, it is determined at Step 28 whether or not the elapsed time since the flag is turned ON has exceeded the predetermined time.

In the case where it is determined at Step 28 to be "NO", that is, that the predetermined time has not elapsed since the portable key 38 goes out of the authenticable range (since the flag changes to ON), the routine returns to before Step 21 and repeats the processing at Step 21 and after. On the other hand, in the case where it is determined at Step 28 to be "YES", that is, the predetermined time has elapsed since the portable key 38 goes out of the authenticable range (since the flag changes to ON), the routine proceeds to Step 25 and turns OFF the ACC relay 26. At this time, a notification sound (a buzzer, an alarm, for example) for notifying it from the acoustic device (not shown) in the cab 8 is output, for example. In this case, also, since the conduction of the first electrical component 24 is shut off, the "engine stop/conduction OFF" state is brought about, and the control processing in Fig. 6 is finished (the processing in Fig. 5 is started).

On the other hand, in the case where it is determined at Step 21 to be "YES" and the routine proceeds to Step 29, it is determined at Step 29 whether or not the power switch 12 has been operated (pressed). In the case where it is determined at Step 29 to be "NO", that is, the power switch 12 has not been operated (the ON signal has not been output), the routine returns to before Step 21 and repeats the processing at Step 21 and after. On the other hand, in the case where it is determined at Step 29 to be "YES", that is, that the power switch 12 has been operated (the ON signal has been output), the routine proceeds to Step 25 (through A in Fig. 6) and turns OFF the ACC relay 26. In this case, when the conduction to the first electrical component 24 is shut off, the engine 15 is stopped at the same time, the "engine stop/conduction OFF" state is brought about, and the control processing in Fig. 6 is finished (the processing in Fig. 5 is started).

Thus, according to the embodiment, when the portable key 38 is within the authenticable range in the "engine stop/conduction OFF" state, the vehicle controller 36 of the wireless authentication starting device 37 switches the "engine stop/conduction OFF" state to the "engine stop/conduction ON" state when the power switch 12 is operated in the state where the gate lock lever 13 is at the unlock position by the processing at Steps 1, 9, 11, and 12. That is, even if the portable key 38 is within the authenticable range and the power switch 12 is operated, the gate lock lever 13 should be at the unlock position as a condition in order to bring about the "engine stop/conduction ON" state. As a result, the operation by a person other than those who know the operating method of the hydraulic excavator 1 can be suppressed.

On the other hand, when the portable key 38 is within the authenticable range in the "engine stop/conduction OFF" state, the vehicle controller 36 switches the "engine stop/conduction OFF" state to the "engine driven/conduction ON" state by the processing at Steps 1, 2, 3, and 4 when the power switch 12 is operated in the state where the gate lock lever 13 is at the lock position. That is, even if the portable key 38 is within the authenticable range and the power switch 12 is operated, the gate lock lever 13 should be at the lock position as a condition in order to bring about the "engine driven/conduction ON" state. Here, in the case where the gate lock lever 13 is at the lock position, driving of the hydraulic actuators (the swing cylinder, the boom cylinder 5E, the arm cylinder 5F, the bucket cylinder 5G, the revolving hydraulic motor, the traveling hydraulic motor) is prohibited. Thus, even if the pressurized oil is delivered from the hydraulic pump 17 with start (start-up) of the engine 15, unintended driving of the hydraulic actuator can be suppressed.

Moreover, since there is no need to insert the key in the key cylinder, forgetting to withdraw the key can be also eliminated. Furthermore, in this embodiment, in addition to the gate lock lever 13 at the unlock position in order to bring about the "engine stop/conduction ON" state, the processing at Step 10, that is, seating of the operator on the operator's seat 9 is also set as an additional condition. Thus, the "engine stop/conduction ON" state cannot be brought about unless a plurality of conditions (triggers) other than the operation of the power switch 12, that is, both the conditions that the gate lock lever 13 is at the unlock position and that the operator is seated on the operator's seat 9 are met. Thus, limitation of the operation can be realized in a higher order.

According to the embodiment, in the "engine stop/conduction ON" state, the vehicle controller 36 of the wireless authentication starting device 37 switches the "engine stop/conduction ON" state to the "engine stop/conduction OFF" state by the processing at Steps 23, 24, and 25 in the case where the power switch 12 is operated in the state where the gate lock lever 13 is at the unlock position. Thus, a person who brought about the "engine stop/conduction ON" state can switch the "engine stop/conduction ON" state to the "engine stop/conduction OFF" state only by operating the power switch 12 without operating the gate lock lever 13.

According to the embodiment, the vehicle controller 36 switches the engine stop/conduction ON" state to the "engine stop/conduction OFF" state by the processing at Steps 22, 26, 27, and 25 when the gate lock lever 13 is at the lock position, the operator has left the operator's seat 9, and the portable key 38 goes out of the authenticable range in the "engine stop/conduction ON" state. Thus, even if the person who brought about the "engine stop/conduction ON" state sets the gate lock lever 13 at the lock position after that and leaves the operator's seat 9, the engine stop/conduction ON" state switches to the "engine stop/conduction OFF" state when the portable key 38 goes out of the authenticable range. In other words, even if the person who brought about the "engine stop/conduction ON" state forgets to set the "engine stop/conduction OFF" state (forgets to operate the power switch 12 for bringing about the "engine stop/conduction OFF" state), the state automatically switches to the "engine stop/conduction OFF" state when the portable key 38 goes out of the authenticable range. As a result, running-out of the battery 18 can be suppressed.

According to the embodiment, when the vehicle controller 36 switches the "engine stop/conduction ON" state to the "engine stop/conduction OFF" state, the notification sound for notifying it to the operator is output. As a result, the operator who hears this notification sound can recognize that the "engine stop/conduction ON" state is switched to the "engine stop/conduction OFF" state. Conversely, even if the operator forgets to switch the "engine stop/conduction ON" state to the "engine stop/conduction OFF" state, the operator can instantly judge whether the state of the hydraulic excavator 1 is the "engine stop/conduction ON" state or the "engine stop/conduction OFF" state when the operator notices it.

According to the embodiment, when the power switch 12 is operated in the "engine driven/conduction ON" state, the vehicle controller 36 switches the "engine driven/conduction ON" state to the "engine stop/conduction OFF" state by the processing at Steps 29 and 25. Thus, the engine driven/conduction ON" state can be switched to the "engine stop/conduction OFF" state only by operating the power switch 12 in the "engine driven/conduction ON" state.

According to the embodiment, the vehicle controller 36 maintains the "engine driven/conduction ON" state even if the portable key 38 goes out of the authenticable range in the "engine driven/conduction ON" state. Thus, even if the operator leaves the hydraulic excavator 1 while holding the portable key 38 during the work in the "engine driven/conduction ON" state in order to check the excavating state, the "engine driven/conduction ON" state is not switched to the "engine stop/conduction OFF" state. As a result, the operator who returns to the hydraulic excavator 1 can rapidly resume the work without requiring an operation of changing the "engine stop/conduction OFF" state to the "engine driven/conduction ON" state. As a result, workability can be improved.

It should be noted that in the aforementioned embodiment, as shown in Fig. 5, the case where it is so constituted that, in the case where the portable key 38 is within the authenticable range and the gate lock lever 13 is at the unlock position (lowered position), the "engine stop/conduction OFF" state is switched to the "engine stop/conduction ON" state when the operator is seated on the operator's seat 9 and the power switch 12 is operated is described as an example. However, the present invention is not limited thereto, and it may be so constituted that, for example, in the case where the portable key 38 is within the authenticable range and the gate lock lever 13 is at the unlock position (lowered position), the engine stop/conduction OFF" state is switched to the "engine stop/conduction ON" state when the operator is seated on the operator's seat 9, the door of the cab 8 is closed, and the power switch 12 is operated. In this case, an opening/closing sensor (opening/closing switch) for the door is provided in the cab 8, and the opening/closing sensor is connected to the vehicle controller 36. According to this arrangement, it can be so constituted that the "engine stop/conduction ON" state cannot be brought about unless three conditions other than the operation of the power switch 12, that is, that the gate lock lever 13 is at the unlock position, the operator is seated on the operator's seat 9, and the door of the cab 8 is closed are met. As a result, limitation of the operation can be realized in a higher order.

In the aforementioned embodiment, as shown in Fig. 5, the case where it is so constituted that, in the case where the portable key 38 is within the authenticable range and the gate lock lever 13 is at the unlock position (lowered position), the "engine stop/conduction OFF" state is switched to the "engine stop/conduction ON" state when the operator is seated on the operator's seat 9 and the power switch 12 is operated is described as an example. However, the present invention is not limited thereto, and it may be so constituted that, in the case where the portable key is within the authenticable range and the lock lever is at the unlock position (lowered position), the "engine stop/conduction OFF" state is switched to the "engine stop/conduction ON" state when the power switch is operated regardless of the operator's sitting-down on/having left the operator's seat or opening/closing of the door of the cab.

In the aforementioned embodiment, as shown in Fig. 5, the case where it is so constituted that, in the case where the portable key 38 is within the authenticable range and the gate lock lever 13 is at the lock position (raised position), the "engine stop/conduction OFF" state is switched to the "engine driven/conduction ON" state when the power switch 12 is operated is described as an example. However, the present invention is not limited thereto, and it may be so constituted that, in the case where the portable key is within the authenticable range and the gate lock lever is at the lock position (raised position), the "engine stop/conduction OFF" state is switched to the "engine driven/conduction ON" state when the operator is seated on the seat and the power switch is operated.

In the aforementioned embodiment, the case where the operator's sitting-down on/having left the seat is determined by using the sit-down sensor 9A such as a pressure switch and the like provided on the operator's seat 9 is described as an example. However, the present invention is not limited thereto, and various sensors and switches including a ceiling sensor, an infrared sensor, and an image sensor can be used, for example, as long as it is a sensor (operator detection unit) that can detect whether the operator is present or not.

In the aforementioned embodiment, the case where the hydraulic actuator whose driving is prohibited when the gate lock lever 13 is at the lock position (raised position) is made the hydraulic actuator (the swing cylinder, the boom cylinder 5E, the arm cylinder 5F, the bucket cylinder 5G, the revolving hydraulic motor, the traveling hydraulic motor) relating to all the works and traveling is described as an example. However, the present invention is not limited thereto, but the hydraulic actuator for which the driving is prohibited can be selected in accordance with specification of the hydraulic excavator (construction machine), for example.

In the aforementioned embodiment, the case where determination (authentication) is made by the keyless controller 41 on whether or not the portable key 38 is within the authenticable range and turning ON (closed)/OFF (open) of the C relay 22 and the ACC relay 26 is performed by the vehicle controller 36 by using this determination result (authentication result) is described as an example. However, the present invention is not limited thereto, but, for example, the function of the keyless controller may be given to the vehicle controller (the keyless controller may be omitted) such that the LF transmission antenna and the RF transmission antenna are connected to the vehicle controller and the authentication of the portable key is executed by the vehicle controller or the like.

In the aforementioned embodiment, the case where the electrical component (electrical device) in which conduction and non-conduction with the battery 18 is switched in accordance with ON (closed)/OFF (open) of the ACC relay 26 is made the first electrical component 24, the electrical component (electrical device) in which conduction and non-conduction is switched in accordance with ON (closed) /OFF (open) of the C relay 22 is made the starter motor 16 of the engine 15, and the electrical component (electrical device) normally connected to the battery 18 regardless of ON (closed)/OFF (open) of the ACC relay 26 is made the second electrical component 27 is described as an example.

However, the present invention is not limited thereto, but, for example, the electrical component (electrical device) other than the starter motor 16 in which conduction and non-conduction with the battery is switched in accordance with ON (closed) /OFF (open) of the ACC relay is made the first electrical component (electrical device). Moreover, various devices corresponding to the first electrical component and the various devices corresponding to the second electrical component 27 in this embodiment are one exemplification and can be changed as appropriate in accordance with the specification of the hydraulic excavator (construction machine), optional electrical components (electrical device) and the like. That is, to make some device the first electrical component or the second electrical component can be selected in accordance with electrical components (electrical device) mounted on the hydraulic excavator (construction machine).

In the aforementioned embodiment, the engine-type hydraulic excavator 1 including the engine 15 as a driving source of the hydraulic pump 17 is described as an example. However, the present invention is not limited to this and may be a hybrid-type hydraulic excavator (hybrid-type construction machine) including an engine and an assist generator motor (generator electric motor, electric generator, electric motor). In this case, the assist generator motor may be a starter motor of the engine.

In the aforementioned embodiment, the case mounted on the small-sized hydraulic excavator 1 is described as an example. However, the construction machine according to the present invention is not limited to this and may be applied to a hydraulic excavator of a medium size or larger, for example. Moreover, the present invention can be widely applied to various construction machines such as a hydraulic excavator including a wheel-type lower traveling structure, a wheel loader, a forklift, a hydraulic crane and the like.

### DESCRIPTION OF REFERENCE NUMERALS

- 1:: Hydraulic excavator (Construction machine)
- 5E:: Boom cylinder (Hydraulic actuator)
- 5F:: Arm cylinder (Hydraulic actuator)
- 5G:: Bucket cylinder (Hydraulic actuator)
- 9:: Operator's seat
- 12:: Power switch
- 13:: Gate lock lever (Lock lever)
- 15:: Engine
- 16:: Starter motor (Electrical device)
- 17:: Hydraulic pump
- 18:: Battery
- 24:: First electrical component (Electrical device)
- 37:: Wireless authentication starting device
- 38:: Portable key

## Claims

1. A construction machine comprising:
an engine (15) which is a power source;
a battery (18) which is an electronic power supply of electrical devices (24) including said engine (15);
a hydraulic pump (17) driven by said engine (15) and supplying a pressurized oil;
a hydraulic actuator (5E, 5F, 5G) driven by the pressurized oil supplied from said hydraulic pump (17);
a lock lever (13) switched by an operation of an operator between a lock position where driving of said hydraulic actuator (5E, 5F, 5G) is prohibited and an unlock position where driving of said hydraulic actuator (5E, 5F, 5G) is permitted; and
an operator's seat (9) on which the operator is seated, wherein
a work is performed by driving of said hydraulic actuator (5E, 5F, 5G) in a state where said lock lever (13) is switched to the unlock position, **characterized in that**:
a power switch (12) provided in the vicinity of said operator's seat (9) and operated by the operator is provided; and
a wireless authentication starting device (37) for switching conduction or non-conduction between said battery (18) and said electrical device (24) on the basis of an operation of said power switch (12) and authentication of said portable key (38) by wireless communication is provided;
assuming that a state where said engine (15) is stopped and said electrical device (24) is not conducted is made an "engine stop/conduction OFF" state;
a state where said engine (15) is driven and said electrical device (24) is conducted is made an "engine driven/conduction ON" state; and
a state where said engine (15) is stopped and said electrical device (24) is conducted is made an "engine stop/conduction ON" state,
said wireless authentication starting device (37) switches the "engine stop/conduction OFF" state to the "engine stop/conduction ON" state when, in the "engine stop/conduction OFF" state, said portable key (38) is within an authenticable range, said lock lever (13) is at the unlock position, and said power switch (12) is operated; and
said wireless authentication starting device (37) switches the "engine stop/conduction OFF" state to the "engine driven/conduction ON" state, when, in the "engine stop/conduction OFF" state, said portable key (38) is within the authenticable range, said lock lever (13) is at the lock position, and said power switch (12) is operated.

2. The construction machine according to claim 1, wherein
when, in the "engine stop/conduction ON" state, said lock lever (13) is at the unlock position and said power switch (12) is operated,
said wireless authentication starting device (37) switches the "engine stop/conduction ON" state to the "engine stop/conduction OFF" state.

3. The construction machine according to claim 1, wherein
when, in the "engine stop/conduction ON" state, said lock lever (13) is at the lock position, the operator has left said operator's seat (9), and said portable key (38) goes out of the authenticable range,
said wireless authentication starting device (37) switches the "engine stop/conduction ON" state to the "engine stop/conduction OFF" state.

4. The construction machine according to claim 2, wherein
when the "engine stop/conduction ON" state is switched to the "engine stop/conduction OFF" state,
said wireless authentication starting device (37) outputs a notification sound for notifying the fact to the operator.

5. The construction machine according to claim 3, wherein
when the "engine stop/conduction ON" state is switched to the "engine stop/conduction OFF" state,
said wireless authentication starting device (37) outputs a notification sound for notifying the fact to the operator.

6. The construction machine according to claim 1, wherein
when, in the "engine driven/conduction ON" state, said power switch (12) is operated,
said wireless authentication starting device (37) switches the "engine driven/conduction ON" state to the "engine stop/conduction OFF" state.

7. The construction machine according to claim 1, wherein
even in the case where said portable key (38) goes out of the authenticable range in the "engine driven/conduction ON" state, said wireless authentication starting device (37) maintains the "engine driven/conduction ON" state, and when said power switch (12) is operated, said wireless authentication starting device (37) switches the "engine driven/conduction ON" state to the "engine stop/conduction OFF" state.

8. The construction machine according to claim 1, wherein
said lock lever (13) is a gate lock lever (13) which is at the lock position where driving of said hydraulic actuator (5E, 5F, 5G) is prohibited at a raised position and at the unlock position where driving of said hydraulic actuator (5E, 5F, 5G) is permitted at a lowered position.
